# EUROPEAN PATENT APPLICATION

(11) **EP 3 537 282 A1**
(43) Date of publication of application: **11.09.2019**
(21) Application number: 19158792.2
(22) Date of filing: 22.02.2019
(51) Int. Cl.: G06F 3/12

(54) **SYSTEM AND METHOD OF RESOLUTION PREDICTION FOR MULTIFUNCTION PERIPHERIAL FAILURES**

(30) Priority: 05.03.2018 US 201815911844
(71) Applicant: Toshiba Tec Kabushiki Kaisha, 141-8562 Tokyo (JP); Kabushiki Kaisha Toshiba, Minato-ku Tokyo 105-8001 (JP)
(72) Inventor: Yeung, Michael, Tokyo, 141-8562 (JP); Sreekumar, Manju, Tokyo, 141-8562 (JP); Sabandith, Milong, Tokyo, 141-8562 (JP); Phoboonme, Methee, Tokyo, 141-8562 (JP); Ormond, Louis, Tokyo, 141-8562 (JP)
(74) Representative: Hoffmann Eitle

(57) **Abstract**

A system and method for predicting device failures and generating proposed resolutions for such an error when occurs includes receiving device status data from each of a plurality of identified multifunction peripherals into a memory. Service history data for each of the multifunction peripherals is stored, the service history data including data corresponding to a plurality of data patterns associated with prior device failures associatively with resolutions implemented to address such failures. Patterns are detected in received device status data. Device failure is predicted for at least one identified multifunction peripheral in accordance with detected patterns and service history data. The predicted device failure is reported along with at least one proposed resolution to address a device error predicted by the predictive device failure data.

## Description

### TECHNICAL FIELD

This application relates generally to maintenance of document processing devices. The application relates more particularly to predicting device failures for multifunction peripherals to facilitate prophylactic device repair and part availability.

### SUMMARY

In an example embodiment a system and method for predicting device failures and generating proposed resolutions for such an error when occurs includes receiving device status data from each of a plurality of identified multifunction peripherals into a memory. Service history data for each of the multifunction peripherals is stored, the service history data including data corresponding to a plurality of data patterns associated with prior device failures associatively with resolutions implemented to address such failures. Patterns are detected in received device status data. Device failure is predicted for at least one identified multifunction peripheral in accordance with detected patterns and service history data. The predicted device failure is reported along with at least one proposed resolution to address a device error predicted by the predictive device failure data.

One of the objects of the present invention is to improve prior art techniques and overcome at least some of the prior art problems as for instance above illustrated.

According to a first aspect of the invention, it is provided a system comprising a processor and associated memory; and a network interface configured to receive device status data from each of a plurality of identified multifunction peripherals, wherein the memory is configured to store service history data for each of the multifunction peripherals, the service history data including data corresponding to a plurality of data patterns associated with prior device failures associatively with resolutions implemented to address the prior device failures; wherein the processor is configured to detect patterns in received device status data, wherein the processor is further configured generate predictive device failure data for at least one identified multifunction peripheral in accordance with detected patterns and service history data, wherein the processor is further configured to output the predictive device failure data, and wherein the processor is further configured to identify at least one proposed resolution to address a device error predicted by the predictive device failure data.

Optionally. in the system according to the first aspect of the invention, the memory is further configured to store a device service schedule for the plurality of multifunction peripherals, wherein the processor is further configured to generate an updated device service schedule in accordance with the predictive device failure data, and wherein the processor is further configured to output the updated device service schedule to a device service provider via the network interface.

Optionally, in the system according to the first aspect of the invention, the memory is further configured to store data corresponding to identification of replacement parts associated with addressing a device repair for an identified multifunction peripheral identified by the predicative device failure data.

Optionally, in the system according to the first aspect of the invention, the memory is further configure to store inventory data corresponding to an inventory of available replacement parts, wherein the processor is further configured to determine availability of a required replacement part identified for addressing the device repair for the identified multifunction peripheral, wherein the processor is further configured to generate a parts order when the processor determines that the required replacement part is not in inventory, and wherein the processor is further configured to communicate the parts order to a parts supplier.

Optionally, in the system according to the first aspect of the invention, the processor is further configured to generate the predictive device failure data in accordance with an application of a generalized extreme Studentized deviate test.

Optionally, in the system according to the first aspect of the invention, the processor is further configured to generate a plurality of ranked, proposed resolutions to address the predicted device error.

Optionally, in the system according to the first aspect of the invention, the device state data includes multifunction peripheral device errors and device usage data.

Optionally, in the system according to the first aspect of the invention, the processor is further configured to generate a plurality of ranked, proposed resolutions to address the predicted device error.

According to a second aspect of the invention, it is provided a method comprising receiving device status data from each of a plurality of identified multifunction peripherals into a memory; storing service history data for each of the multifunction peripherals, the service history data including data corresponding to a plurality of data patterns associated with prior device failures associatively with resolutions implemented to address such failures; detecting patterns in received device status data; generating predictive device failure data for at least one identified multifunction peripheral in accordance with detected patterns and service history data; outputting the predictive device failure data; and identifying at least one proposed resolution to address a device error predicted by the predictive device failure data.

Optionally, the method according to the second aspect of the invention further comprises storing a device service schedule for the plurality of multifunction peripherals; generating an updated device service schedule in accordance with the predictive device failure data; and outputting the updated device service schedule to a device service.

Optionally, the method according to the second aspect of the invention further comprises storing data, in the memory, corresponding to identification of replacement parts associated with addressing device repair for multifunction peripherals identified in the predicative device failure data.

Optionally, the method according to the second aspect of the invention further comprises storing inventory data, in the memory, corresponding to an inventory of available replacement parts; determining availability of a required replacement part identified for addressing a device repair for an identified multifunction peripheral; generating a parts order when the processor determines that the required replacement part is not in inventory; and communicating the parts order to a parts supplier.

Optionally, the method according to the second aspect of the invention further comprises detecting an anomalous pattern in accordance with an application of a generalized extreme Studentized deviate test to the device state data.

Optionally, the method according to the second aspect of the invention further comprises generating a plurality of ranked, proposed resolutions to address the predicted device error.

Optionally, in the method according to the second aspect of the invention, the device state data includes multifunction peripheral device errors and device usage data. According to a third aspect of the invention, it is provided a system comprising a a plurality of multifunction peripherals, each multifunction peripheral including, a plurality of sensors configured to generate state data corresponding to a state of an associated multifunction peripheral, a network interface, and an intelligent controller configured to communicate generated state data to an associated server via the network interface; and a server comprising a processor and associated memory, and a network interface configured to receive device state data from each of the plurality of identified multifunction peripherals, wherein the memory is configured to store service history data including data corresponding to a plurality of data patterns associated with prior device failures associatively with a resolutions implemented to address such failures for each of the multifunction peripherals, wherein the processor is configured to detect patterns in received device state data; wherein the memory is further configured to store location data corresponding to a location of each of the plurality of multifunction peripherals, wherein the processor is further configured generate predictive device failure data for subset of the multifunction peripherals in accordance with detected patterns and service history data, wherein the processor is further configured to generate a device cluster within the subset of multifunction peripherals in accordance with the location data, wherein the processor is further configured to generate a proposed resolution to address a device failure predicted by the predictive device failure data, and wherein the processor is further configured to output the predictive device failure data, proposed resolution and device location corresponding to identified multifunction peripherals in the device cluster.

Optionally, in the system of the third aspect of the invention, the processor is further configured to generate a plurality of ranked proposed resolutions, and wherein the processor is further configured to output the predictive device failure data, the plurality of ranked proposed resolutions, and device location corresponding to identified multifunction peripherals in the device cluster.

Optionally, in the system according to the third aspect of the invention, the memory is further configured for storing a maintenance schedule for the plurality of multifunction peripherals, and wherein the processor is further configured to generate an updated maintenance schedule in accordance with the device cluster.

Optionally, in the system according to the third aspect of the invention, the device state data includes page count data and device error data.

Optionally, in the system according to the third aspect of the invention, the device state date includes data corresponding to device environmental conditions.

### BACKGROUND

Document processing devices include printers, copiers, scanners and e-mail gateways. More recently, devices employing two or more of these functions are found in office environments. These devices are referred to as multifunction peripherals (MFPs) or multifunction devices (MFDs). As used herein, MFP means any of the forgoing.

Given the expense in obtaining and maintain MFPs, MFPs are frequently shared by users and monitored by technicians via a data network for example using Simple Network Management Protocol (SNMP). MFP devices are complex devices that are subject to failures. When devices fail, an end user will initiate a service call. Device can be particularly frustrating for device users. They can result in periods when a MFP is out of service, leaving users without a powerful office tool and causing user frustration when a job must wait or an alternative MFP used, such as one that is not conveniently located or one without needed capabilities that were available on the out of service MFP.

Not only are failed devices a burden on end users, they can provide significant financial cost to MFP providers. A common business model for MFPs is one wherein a distributor enters into an end user agreement where the distributer provides a device at little or no upfront cost to the end user. User charges are based a cost per page. This cost reflects device usage charges, as well as maintenance costs. Significant human resource costs are associated with receiving a service call, logging a call, scheduling a service time, dispatching a service technician, and diagnosing and repairing the device. Such service costs can lower the distributor's profitability, increase the end user's cost per page, or both.

### BRIEF DESCRIPTION OF THE DRAWINGS

Various embodiments will become better understood with regard to the following description, appended claims and accompanying drawings wherein:
FIGURE 1 is an example embodiment of a predicative device failure system;
FIGURE 2 is a networked document rendering system;
FIGURE 3 is an example embodiment of a digital data processing device;
FIGURE 4 is a flow diagram of a device error prediction system;
FIGURE 5 is flow diagram of an example embodiment of a machine learning system;
FIGURE 6 is an illustration of example machine learning algorithms;
FIGURE 7 illustrates example visual depictions of machine learning algorithm results;
FIGURE 8 is an example embodiment of a breakdown of device symptoms; and
FIGURE 9 is an example embodiment of resolution of device failures.

### DETAILED DESCRIPTION

The systems and methods disclosed herein are described in detail by way of examples and with reference to the figures. It will be appreciated that modifications to disclosed and described examples, arrangements, configurations, components, elements, apparatuses, devices methods, systems, etc. can suitably be made and may be desired for a specific application. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such.

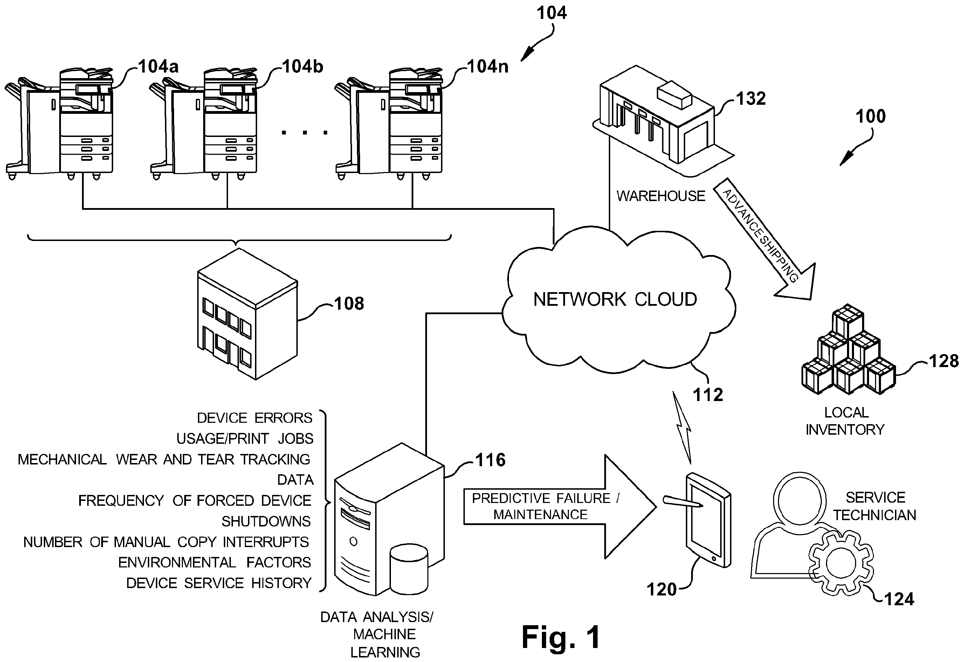

Turning to Figure 1, illustrated is example embodiment of a predicative device failure system 100 that includes a plurality of MFPs 104, illustrated with 104a, 104b through 104n. The MFPs 104 are dispersed geographically. One or more MFPS 104 may be located at a single business location 108, over multiple locations for a single business, or among multiple businesses. All MFPs 104 are configured for data communication via network cloud 112, suitably comprised of some or all of a local area network (LAN) or wide area network (WAN) which may comprise the global Internet. Also in data communication with network cloud 112 is a data analysis and machine learning service suitably including one or more servers as illustrated by server 116. MFPs 104 each include one or more components configured to monitor one or more states of the device which are reported to server 116 which also stores additional information such as repair histories and device maintenance schedules, suitably coordinated with one or more service technicians. Server 116 also stores location information for MFPs 104. Location information is suitably a geographic location determined for each MFP 104. Location information may be preset by a device physical location description, device installation address, device IP address information, and the like. Location information may also be determined by an MFP 104 itself, such as with GPS positioning, cell tower sector positioning, RF triangulation or the like.

Server 116 accumulates MFP data such as device error logs, device usage, such as number of print jobs or device page count, mechanical wear and tear tracking, forced shutdowns, copy interruptions or environmental factors such as temperature, humidity, ground stability, barometric pressure, and the like. Historical data corresponding to data patterns associated with prior device failures is stored associatively with prior solutions used to address each error. Server 116 monitors data incoming data patterns for monitored MFPs relative to historical data patterns to predict likely device failures in advance of an actual failure, along with one or more proposed solutions to the predicted device error based upon prior resolutions associated with a failure for the same or similar data pattern. More than one solution may suitably be determined. A ranking is suitably given to multiple possible resolutions. For example, prior, higher ranked resolutions may include mechanical adjustment and part replacement. Thus, a technician can order a needed part in the event mechanical adjustment does not address problem once it occurs.

Predictive device error information, along with one or more proposed resolutions used in the past for similar errors, is suitably be communicated to a service center or service technician via a digital device, such as tablet computer 120 of service technician 124. Server 116 suitably associates suggested maintenance procedures and required part information with identified devices predicted to fail. A suitable check of existing inventory, such as local inventory 128 is made. If sufficient parts are not available, an order for required parts is suitably sent to a parts supplier such as warehouse 132. When a predicted failure does occur, pattern data associated with that failure is fed back into the system to further refine the historical pattern data, along with data corresponding to the resolution that was ultimately used to remedy the problem. With such machine learning, each new failure situation and resolution will further refine the system for predicting and addressing future failures.

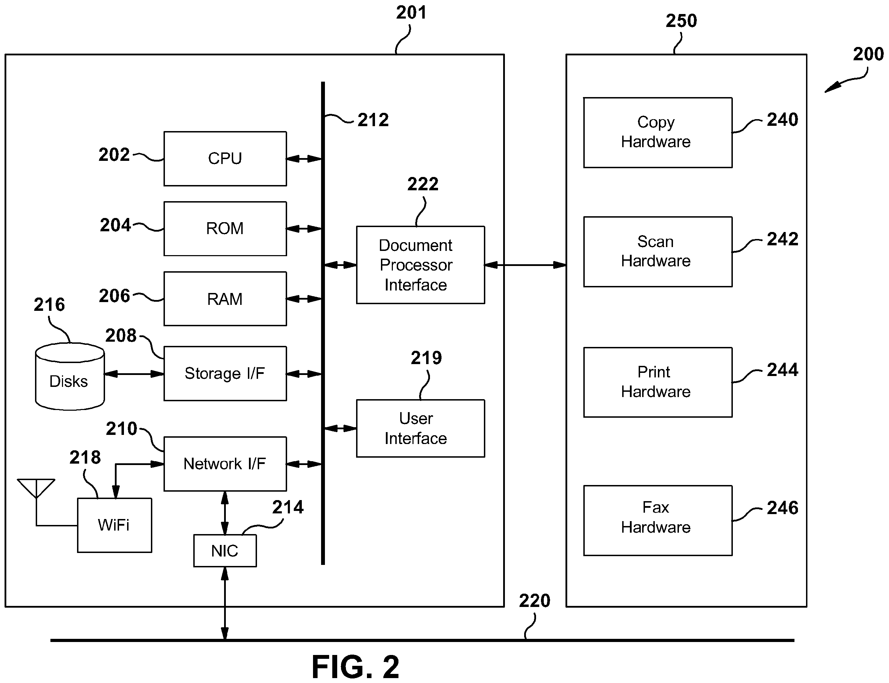

Turning now to FIGURE 2 illustrated is an example embodiment of a networked digital device comprised of document rendering system 200 suitably comprised within an MFP, such as with MFPs 104 of FIGURE 1. It will be appreciated that an MFP includes an intelligent controller 201 which may be represented for example by a computer system, a computer device or in general by any suitable controller for performing the mentioned functions. Thus, an MFP can itself function as a cloud server with the capabilities described herein. Included in controller 201 are one or more processors, such as that illustrated by processor 202. Each processor is suitably associated with non-volatile memory, such as ROM 204, and random access memory (RAM) 206, via a data bus 212.

Processor 202 is also in data communication with a storage interface 208 for reading or writing to a storage 216, suitably comprised of a hard disk, optical disk, solid-state disk, cloud-based storage, or any other suitable data storage as will be appreciated by one of ordinary skill in the art.

Processor 202 is also in data communication with a network interface 210 which provides an interface to a network interface controller (NIC) 214, which in turn provides a data path to any suitable wired or physical network connection 220, or to a wireless data connection via wireless network interface 218. Example wireless connections include cellular, Wi-Fi, Bluetooth, NFC, wireless universal serial bus (wireless USB), satellite, and the like. Example wired interfaces include Ethernet, USB, IEEE 1394 (FireWire), Lightning, telephone line, or the like. Processor 202 is also in data communication with user interface 219 for interfacing with displays, keyboards, touchscreens, mice, trackballs and the like.

Processor 202 can also be in data communication with any suitable user input/output (I/O) interface 219 which provides data communication with user peripherals, such as displays, keyboards, mice, track balls, touch screens, or the like.

Also in data communication with data bus 212 is a document processor interface 222 suitable for data communication with MFP functional units. In the illustrated example, these units include copy hardware 240, scan hardware 242, print hardware 244 and fax hardware 246 which together comprise MFP functional hardware 250. It will be understood that functional units are suitably comprised of intelligent units, including any suitable hardware or software platform.

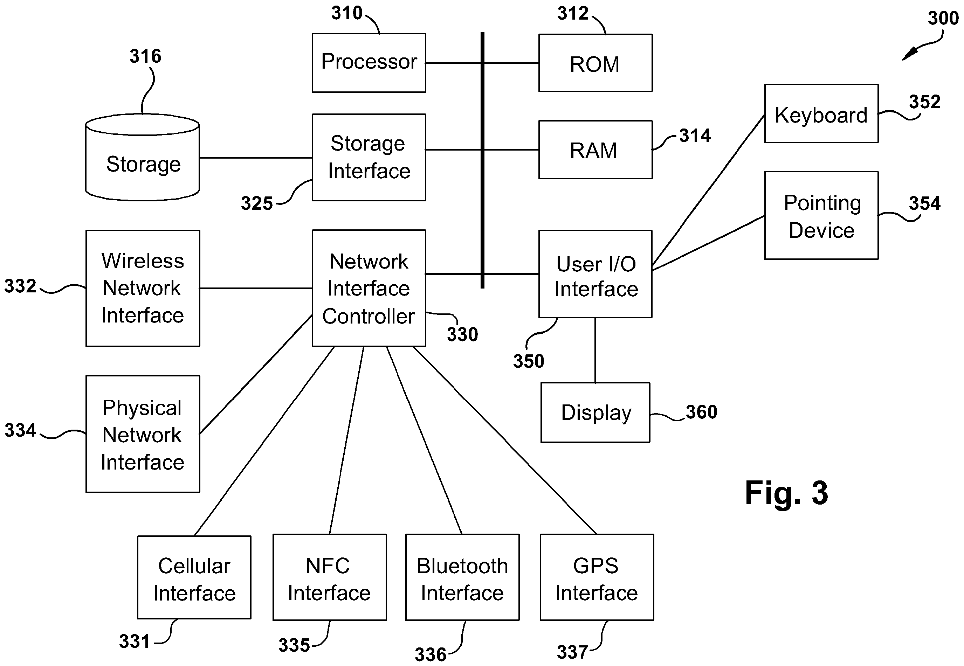

Turning now to FIGURE 3, illustrated is an example embodiment of a digital data processing device 300 such as tablet computer 120 or server 116 of FIGURE 1. Components of the data processing device 300 suitably include one or more processors, illustrated by processor 310, memory, suitably comprised of read-only memory 312 and random access memory 314, and bulk or other non-volatile storage 316, suitable connected via a storage interface 325. A network interface controller 330 suitably provides a gateway for data communication with other devices via wireless network interface 332 and physical network interface 334, as well as a cellular interface 331 such as when the digital device is a cell phone or tablet computer. Also included is NFC interface 335, Bluetooth interface 336 and GPS interface 337. A user input/output interface 350 suitably provides a gateway to devices such as keyboard 352, pointing device 354, and display 360, suitably comprised of a touch-screen display. It will be understood that the computational platform to realize the system as detailed further below is suitably implemented on any or all of devices as described above.

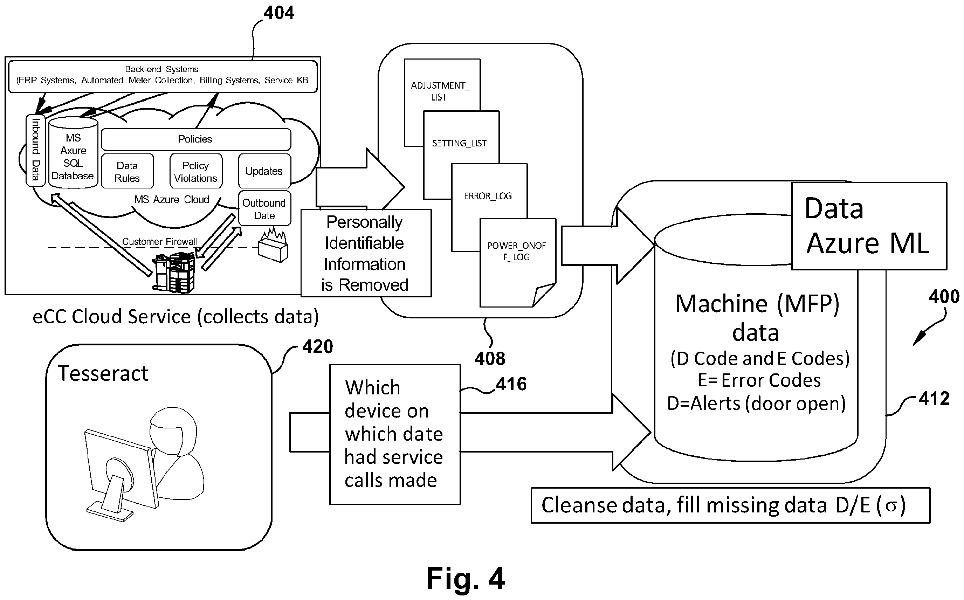

FIGURE 4 is a flow diagram of a device error prediction system 400 such as one implemented in conjunction with server 116 of FIGURE 1. Device monitoring is suitably accomplished with a device management system 404. By way of particular example, Toshiba TEC MFP devices are configurable and monitor able via their e-BRIDGE CloudConnect (eCC web) interface. e-BRIDGE CloudConnect is an integrated system of embedded and cloud-based applications that provide functionality to support remote monitoring and management of Toshiba MFPs. It enables management of configuration settings through automated interaction. e-BRIDGE CloudConnect gathers service information from connected MFPs, including meter data, to speed issue diagnosis and resolution.

Device management system 404 provides device state information 408 for application of machine learning and analysis for predictive device failures by a suitable machine learning platform 412 such as Microsoft Azure. Additional information 416 for such prediction, such as device service log information, is provided by a suitable CMMS (Computerized Maintenance Management System (or Software)) 420, and is sometimes referred to as Enterprise Asset Management (EAM). By way of particular example a CMMS system 420 can be based on CMMS Software, Field Service Software, or Field Force Automation Software provided by Tessaract Corporation.

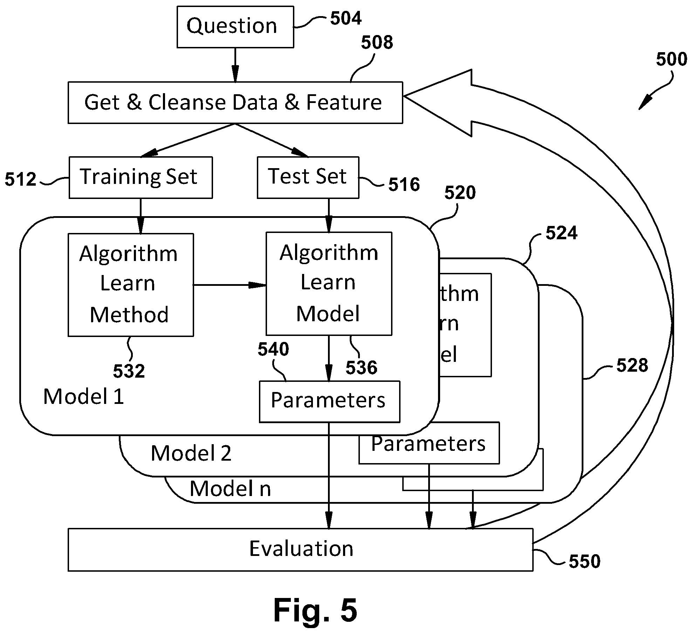

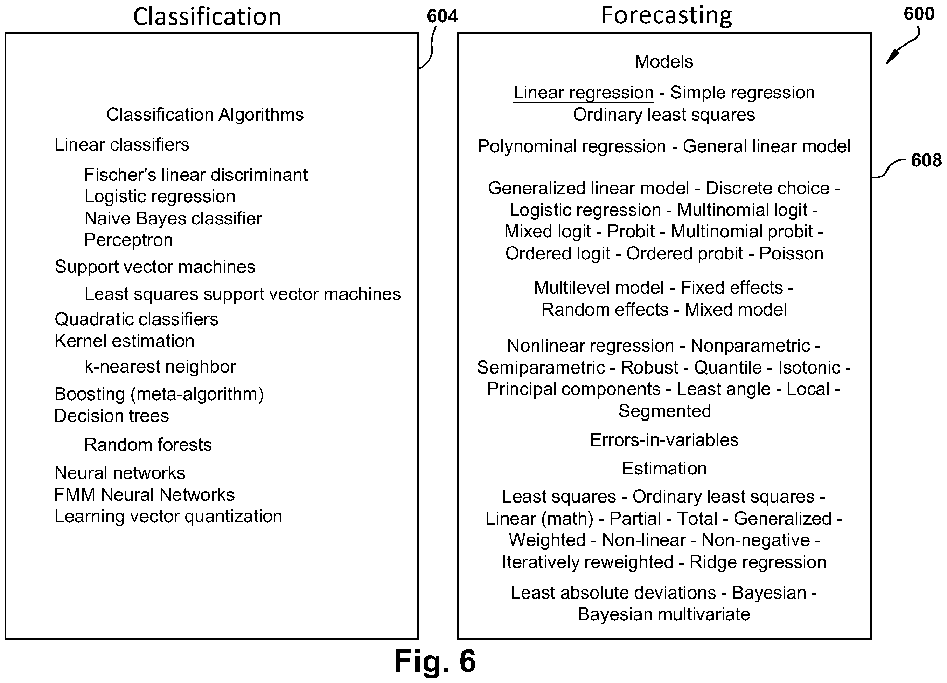

FIGURE 5 illustrates a flow diagram 500 of an example embodiment of a machine learning system. In the example system, the process starts with one or more questions 504, such as when will a device likely fail and what aspects or aspects will be associated with such failure. Data is retrieved and cleansed of unneeded or problematic data at 508 and this data is provided for both training 512 and testing 516. These results are provided to a machine learning system, suitably comprised of one or more learning models such as learning models 520, 524 and 528. Each learning model 520, 524, 528 includes one or more algorithm learn methods, such as algorithm learn methods 532 and 536 of model 520. Parameters, such as parameters 540 of model 520, are provided for evaluation at 550, and results are fed back to data acquisition at 508 for iterative calculation. FIGURE 6 provides example machine learning algorithms 600 including classification algorithms 604 and forecasting algorithms 608.

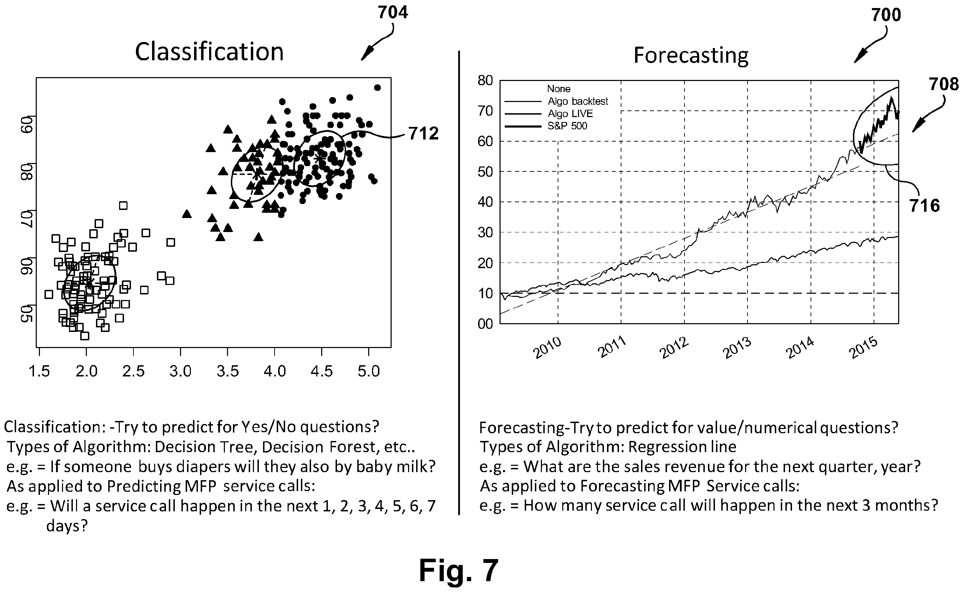

FIGURE 7 provides example visual depictions of algorithm results 700, including classification results 704 and forecasting results 708. Device clusters, such as cluster 712, may be indicative of device error conditions with corresponding failure forecasting with results 716. For example, device failure can be forecasted in accordance with an application of a generalized extreme Studentized deviate test as would be understood in the art.

By way of particular example, a determination of likeliness of a forthcoming service call can be utilized to schedule device maintenance. Such scheduling is suitably integrated with service calls already scheduled or with servicing of two or more geographically proximate devices to minimize travel time needed for technician on-site visits. Suitable machine learning systems are built on available third party platforms such as R-Script, Microsoft Azure, Google Next, Kaggle.com or the like.

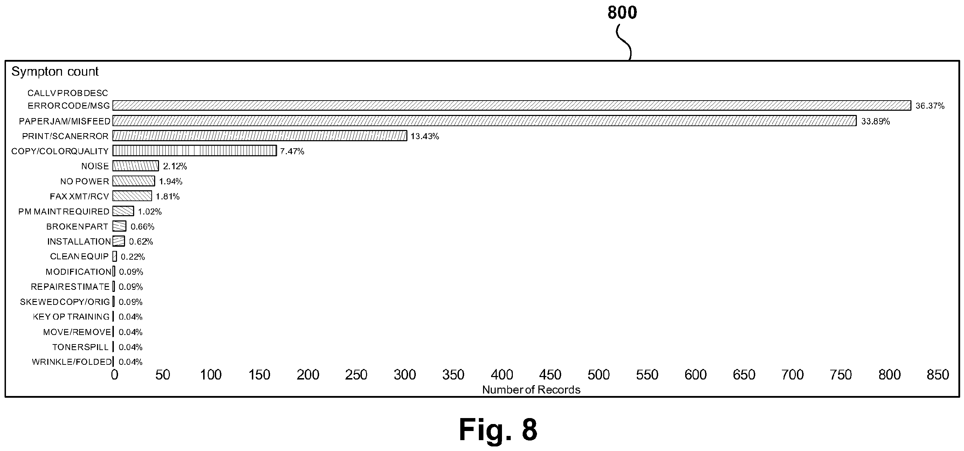

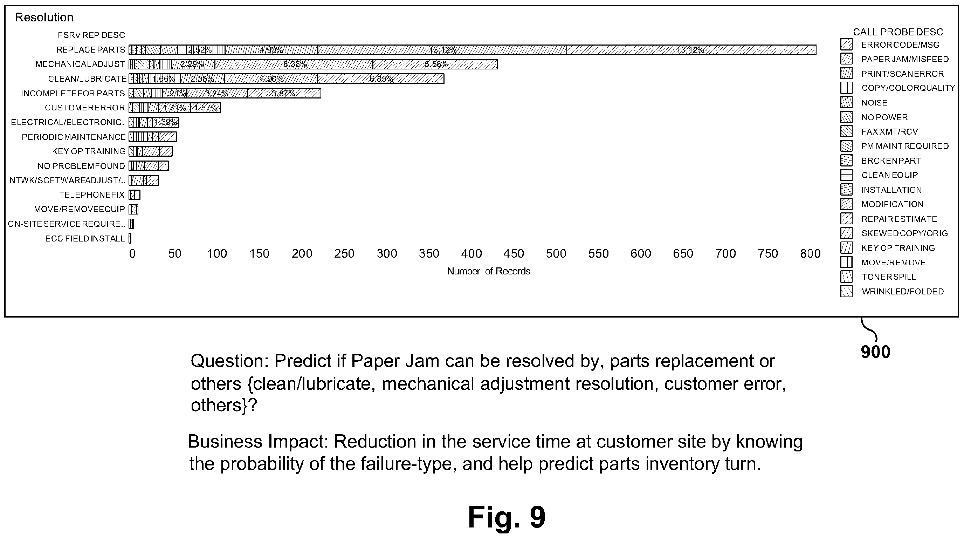

FIGURE 8 is an example embodiment of breakdown of device symptoms 800 for determination of service call likelihood. FIGURE 9 is an example embodiment of problem resolutions 900 associated with device error conditions. Resolutions 900 can be ranked and presented as potential resolution options for preventative service calls.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A system comprising:
a processor and associated memory; and
a network interface configured to receive device status data from each of a plurality of identified multifunction peripherals,
wherein the memory is configured to store service history data for each of the multifunction peripherals, the service history data including data corresponding to a plurality of data patterns associated with prior device failures associatively with resolutions implemented to address the prior device failures;
wherein the processor is configured to detect patterns in received device status data,
wherein the processor is further configured generate predictive device failure data for at least one identified multifunction peripheral in accordance with detected patterns and service history data,
wherein the processor is further configured to output the predictive device failure data, and
wherein the processor is further configured to identify at least one proposed resolution to address a device error predicted by the predictive device failure data.

2. The system of claim 1 wherein the memory is further configured to store a device service schedule for the plurality of multifunction peripherals,
wherein the processor is further configured to generate an updated device service schedule in accordance with the predictive device failure data, and
wherein the processor is further configured to output the updated device service schedule to a device service provider via the network interface.

3. The system of claim 1 or 2 further wherein the memory is further configured to store data corresponding to identification of replacement parts associated with addressing a device repair for an identified multifunction peripheral identified by the predicative device failure data.

4. The system of any of claims 1 to 3, wherein the memory is further configure to store inventory data corresponding to an inventory of available replacement parts,
wherein the processor is further configured to determine availability of a required replacement part identified for addressing the device repair for the identified multifunction peripheral,
wherein the processor is further configured to generate a parts order when the processor determines that the required replacement part is not in inventory, and
wherein the processor is further configured to communicate the parts order to a parts supplier.

5. The system of any of claims 1 to 4, wherein the processor is further configured to generate the predictive device failure data in accordance with an application of a generalized extreme Studentized deviate test.

6. The system of any of claims 1 to 5, wherein the processor is further configured to generate a plurality of ranked, proposed resolutions to address the predicted device error.

7. The system of any of claims 1 to 6, wherein the device state data includes multifunction peripheral device errors and device usage data.

8. The system of any of claims 1 to 7, wherein the processor is further configured to generate a plurality of ranked, proposed resolutions to address the predicted device error.

9. A method comprising:
receiving device status data from each of a plurality of identified multifunction peripherals into a memory;
storing service history data for each of the multifunction peripherals, the service history data including data corresponding to a plurality of data patterns associated with prior device failures associatively with resolutions implemented to address such failures;
detecting patterns in received device status data;
generating predictive device failure data for at least one identified multifunction peripheral in accordance with detected patterns and service history data;
outputting the predictive device failure data; and
identifying at least one proposed resolution to address a device error predicted by the predictive device failure data.

10. The method of claim 9 further comprising:
storing a device service schedule for the plurality of multifunction peripherals;
generating an updated device service schedule in accordance with the predictive device failure data; and
outputting the updated device service schedule to a device service.

11. A system comprising:
a plurality of multifunction peripherals, each multifunction peripheral including,
a plurality of sensors configured to generate state data corresponding to a state of an associated multifunction peripheral,
a network interface, and
an controller configured to communicate generated state data to an associated server via the network interface; and
a server comprising
a processor and associated memory, and
a network interface configured to receive device state data from each of the plurality of identified multifunction peripherals,
wherein the memory is configured to store service history data including data corresponding to a plurality of data patterns associated with prior device failures associatively with a resolutions implemented to address such failures for each of the multifunction peripherals,
wherein the processor is configured to detect patterns in received device state data;
wherein the memory is further configured to store location data corresponding to a location of each of the plurality of multifunction peripherals,
wherein the processor is further configured generate predictive device failure data for subset of the multifunction peripherals in accordance with detected patterns and service history data,
wherein the processor is further configured to generate a device cluster within the subset of multifunction peripherals in accordance with the location data,
wherein the processor is further configured to generate a proposed resolution to address a device failure predicted by the predictive device failure data, and
wherein the processor is further configured to output the predictive device failure data, proposed resolution and device location corresponding to identified multifunction peripherals in the device cluster.

12. The system of claim 11 wherein the processor is further configured to generate a plurality of ranked proposed resolutions, and
wherein the processor is further configured to output the predictive device failure data, the plurality of ranked proposed resolutions, and device location corresponding to identified multifunction peripherals in the device cluster.

13. The system of claim 11 or 12, wherein the memory is further configured for storing a maintenance schedule for the plurality of multifunction peripherals, and
wherein the processor is further configured to generate an updated maintenance schedule in accordance with the device cluster.

14. The system of any of claims 11 to 13, wherein the device state data includes page count data and device error data.

15. The system of any of claims 11 to 14, wherein the device state date includes data corresponding to device environmental conditions.
